Europäisches Patentamt

European Patent Office

Office européen des brevets

(19)

(11) Veröffentlichungsnummer : **0 116 330**
**B1**

(12) **EUROPÄISCHE PATENTSCHRIFT**

(45) Veröffentlichungstag der Patentschrift :
**10.09.86**

(21) Anmeldenummer : **84100899.8**

(22) Anmeldetag : **28.01.84**

(51) Int. Cl.⁴ : **C 08 L 25/16, C 08 L 25/12,
C 08 L 33/12, C 08 L 51/04**

(54) ABS-Formmassen.

(30) Priorität : **10.02.83 DE 3304544**

(43) Veröffentlichungstag der Anmeldung :
**22.08.84 Patentblatt 84/34**

(45) Bekanntmachung des Hinweises auf die Patenterteilung : **10.09.86 Patentblatt 86/37**

(84) Benannte Vertragsstaaten :
**DE FR GB IT**

(56) Entgegenhaltungen :
**DE-A- 1 813 719
DE-B- 1 804 763
US-A- 3 509 238
US-A- 3 928 494**

(73) Patentinhaber : **BAYER AG
Konzernverwaltung RP Patentabteilung
D-5090 Leverkusen 1 Bayerwerk (DE)**

(72) Erfinder : **Zabrocki, Karl, Dr.
Edelfalter 33
D-4044 Büttgen (DE)**
Erfinder : **Ott, Karl-Heinz, Dr.
Paul-Klee-Strasse 54
D-5090 Leverkusen (DE)**
Erfinder : **Schmidt, Adolf, Dr.
Roggendorfstrasse 67
D-5000 Köln 80 (DE)**
Erfinder : **Pischtschan, Alfred, Dr.
Zur Eiche 33
D-5067 Kürten (DE)**

EP 0 116 330 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft in Emulsion hergestellte thermoplastische Formmassen vom ABS-Typ mit gegenüber bekannten ABS-Formmassen verbesserten Eigenschaften, insbesondere hoher Zähigkeit bei leichter Verarbeitbarkeit und gutem Oberflächenglanz.

ABS-Formmassen sind Zweiphasenkunststoffe aus :

I. einem thermoplastischen Copolymerisat aus Styrol und Acrylnitril, in dem das Styrol ganz oder teilweise durch α-Methylstyrol oder Methylmethacrylat ersetzt werden kann ; dieses Copolymerisat, auch als SAN-Harz oder Matrix-Harz bezeichnet, bildet die äußere Phase ;

II. mindestens einem Pfropfpolymerisat, welches hergestellt worden ist durch Pfropfreaktion eines oder mehrerer der unter I. genannten Monomeren auf Butadien-Homo- oder Copolymerisat (« Pfropfgrundlage »). Dieses Pfropfpolymerisat (« Elastomerphase » oder « Pfropfkautschuk ») bildet die disperse Phase im Matrixharz.

Bei gleicher Matrix wird die Zähigkeit einer ABS-Formmasse im wesentlichen durch den Pfropfkautschuk bestimmt. Die mit üblichen ABS-Formmassen erreichbare Zähigkeit reicht derzeit für stark beanspruchte Formteile, z. B. im Fahrzeug-Innenbereich, nicht immer mit der notwendigen Sicherheit aus. Es besteht daher Bedarf an Pfropfkautschuken, auf deren Basis ABS-Formmassen mit erhöhter Zähigkeit hergestellt werden können, ohne daß sich die übrigen Eigenschaften wie Verarbeitbarkeit und Oberflächenglanz verschlechtern.

Aus der DE-AS 1 813 719 sind zähe, gut verarbeitbare ABS-Formmassen bekannt, die erhalten werden durch einstufige, unter Druck ablaufende Emulsions-Pfropfpolymerisation von 75-90 Gew.-Teilen eines Monomergemisches auf 10-25 Gew.-Teile eines Gemisches zweier Kautschuklatices, wovon einer ein reines Polybutadien und der andere ein SBR-Latex mit einem Styrolgehalt < 50 % und einer bestimmten Teilchengröße ist.

In der DE-OS 1 804 763 wird ein ABS-Material beschrieben, zu dessen Herstellung ein vernetztes Pfropfmischpolymerisat mit einem Quellindex > 20 und das Matrix-Harz getrennt synthetisiert und dann gemischt werden. Wie aus den Ausführungsbeispielen hervorgeht, führt dies zwar zu hoher Zähigkeit, aber auch zu schlechtem Glanz.

Die US-PS 3 509 238 beschreibt ABS-Produkte, die unter Verwendung zweier Pfropfpolymerisate hergestellt werden, von denen eines schwach, das andere stark gepfropft ist. Diese Produkte haben jedoch unzureichende Eigenschaften bei tiefen Temperaturen.

In der US-PS 3 928 494 sind ABS-Produkte mit zwei verschieden stark gepfropften Pfropfpolymerisaten beschrieben, bei denen das schwächer bepfropfte feinteilige Material bei Sprühtrocknung oder Koagulation sich zu Teilchenaggregaten zusammenlagert. Derartige Aggregate stellen locker gebundene Gebilde dar, die unter hohen Temperaturen und Scherkräften, wie sie beispielsweise bei der Spritzgußverarbeitung auftreten können, wieder auseinandergerissen werden und dann zu nicht ausreichenden Produktzähigkeiten führen.

Es wurde gefunden, daß man ABS-Formmassen mit verbessertem Zähigkeitsverhalten herstellen kann aus

10-65 Gew.-% mindestens eines Pfropfpolymerisats, welches erhältlich ist durch Emulsionspolymerisation von Styrol und Acrylnitril im Gewichtsverhältnis 90 : 10 bis 50 : 50, wobei Styrol ganz oder teilweise ersetzt werden kann durch α-Methylstyrol oder Methylmethacrylat, in Gegenwart von mindestens zwei Butadienpolymerisatlatices vom Typ A und B, welche jeweils 0-30 % eines weiteren Vinylmonomeren copolymerisiert enthalten, und wobei das Massenverhältnis von eingesetzten Monomeren zu eingesetztem Butadienpolymerisat 35 : 65 bis 70 : 30 beträgt,

90-35 Gew.-% eines Copolymerisats aus Styrol und Acrylnitril im Gewichtsverhältnis 90 : 10 bis 50 : 50, wobei das Styrol ganz oder teilweise durch α-Methylstyrol oder Methylmethacrylat ersetzt werden kann, dadurch gekennzeichnet, daß der Butadienpolymerisatlatex (A) einen Teilchendurchmesser $d_{50} \geqslant 0,35$ μm, und einen Gelgehalt < 85 % besitzt, und der Butadienpolymerisatlatex (B) einen Teilchendurchmesser $d_{50} \leqslant 0,30$ μm besitzt und der mittlere Pfropfstellenabstand des daraus hergestellten Pfropfpolymerisats 4 000-10 000 $C_4$-Einheiten beträgt.

Die Pfropfgrundlage

Als Pfropfgrundlage wird ein Gemisch aus mindestens zwei Butadienpolymerisatlatices, je einem vom Typ (A) und (B), eingesetzt. Das Gewichtsverhältnis (A) : (B) beträgt, bezogen auf den jeweiligen Festanteil der Latices, 90 : 10 bis 5 : 95, vorzugsweise 60 : 40 bis 15 : 85. Bei Vergrößerung des Anteils an Latex (A) erhöht sich die Gefahr unerwünschter Koagulatbildung während der Pfropfreaktion ; kleinere Anteile an Latex (A) lassen die ABS-Produkte weniger zäh werden.

Der Butadienpolymerisatlatex (A) ist ein Homopolymerisat des Butadiens oder ein Copolymerisat des Butadiens mit bis zu 30 Gew.-% eines weiteren Vinylmonomeren, z. B. Acrylnitril, Methacrylnitril, Styrol, α-Methylstyrol, Halogenstyrol, $C_1$-$C_4$-Alkylstyrole, $C_1$-$C_6$-Alkylacrylate und -methacrylate, Alkylenglycoldiacrylate, Divinylbenzol, Chloropren, Isopren. Bevorzugt werden Polybutadien und Copolymerisate mit Styrol oder Acrylnitril.

2

# 0 116 330

Erfindungsgemäß hat der Latex (A) einen mittleren Teilchendurchmesser $d_{50} \geqslant 0{,}35$ μm und einen Gelgehalt $< 85\%$. Im folgenden wird statt Teilchendurchmesser häufig der Begriff Teilchengröße gebraucht. Gemeint ist immer der Durchmesser.

Die mittleren Teilchendurchmesser werden mittels Ultrazentrifuge (vergl. W. Scholtan, H. Lange : Kolloid Z. und Z. für Polymere *250*, 1972, S. 782-796) bestimmt. Die dabei auch ermittelte Teilchengrößenverteilung (TGV) kann den Latex als mono- oder polydispers ausweisen. Polydisperse Latices, d. h. Latices, deren Teilchendurchmesser über einen gewissen Bereich verteilt sind, haben sich für zähe ABS-Formmassen als günstiger erwiesen. Bevorzugt werden Latices mit einer Breite der Teilchengrößenverteilung (gemessen als $d_{90}$-$d_{10}$ aus der integralen Teilchengrößenverteilung) von 0,8 bis 6,0 μm, besonders bevorzugt 1,5 bis 3,5 μm. Die maximale Teilchengröße des Latex (A) ($d_{100}$-Wert der integralen TGV-Kurve) sollte $\leqslant 8{,}0$ μm, vorzugsweise $\leqslant 5{,}0$ μm sein. Bevorzugt verwendet man Latices (A), deren Quellindex in Toluol $\geqslant 25$ liegt.

Die Gelgehalte und Quellindices werden in folgender Weise gemessen :

1 g des trockenen stabilisierten kleingeschnittenen Kautschuks [auswiegen = a (g)] werden mit genau 100 cm³ (Pipette) Toluol in einer braunen Glasstopfenflasche 24 Std. gerollt. Dann wird über einen doppelten Stoffilter mit mäßigem Vakuum abgesaugt, bis das Filtrat keinen Niederschlag mehr aufweist. Die Flasche wird mit einigen val. des Lösungsmittels ausgespült und der Niederschlag mit einigen val. ausgewaschen. Die Wasch- und Spüllösungen werden mit dem Hauptfiltrat vereinigt. Durch den Niederschlag wird noch so lange Luft gesaugt, bis das Filter trocken erscheint.

Das Filter mit dem Niederschlag wird vorsichtig abgehoben und in eine Petrischale überführt, welche mit geschlossenem Deckel dann eingewogen wird = b (g). Die nach dem Einwiegen wieder geöffnete Schale wird am besten über Nacht im Trockenschrank bei 70 °C getrocknet. Nach dem Herausnehmen aus dem Trockenschrank bleibt die Schale offen 1 Std. an der Luft stehen und wird dann zurückgewogen = c (g).

Das Filtrat wird in ein vorher ausgewogenes Becherglas (= d (g)) quantitativ überführt, auf dem Wasserbad eingedampft, im Trockenschrank bei 70 °C bis zur Gewichtskonstanz getrocknet (Gewichtsveränderungen in der 3. Stelle nach dem Komma sind zu vernachlässigen) und ausgewogen = e (g).

1) 
$$\frac{a - (e - d) \cdot 100}{a} = \%\text{-Gel}$$

2) 
$$\frac{(b - c) + a - (e - d)}{a - (e - d)} = \text{Quellungsindex.}$$

Die angegebenen Grenzen (Gelgehalt $\leqslant 85\%$, Quellindex $\geqslant 25$) weisen die Latices als relativ weitmaschige Netzwerke mit unvernetzten Anteilen aus.

Höhere Gelanteile und tiefere Quellindices geben geringere Zähigkeiten in ABS-Formmassen. Besonders bevorzugte Bereiche für den Gelgehalt sind 30-80 %, für den Quellindex 35-50.

Die Latices (A) werden in der Regel durch Emulsionspolymerisation hergestellt ; die erforderlichen Reaktionsbedingungen, Hilfsstoffe und Arbeitstechniken sind grundsätzlich bekannt.

Um die oben definierten Teilchengrößen und Vernetzungsgrade zu erhalten, müssen bei der Herstellung der Latices (A) definierte Polymerisationsbedingungen eingehalten und bestimmte Verfahren benutzt werden. Beispielsweise kann man Emulsionspolymerisation bei niedrigem Wasser/Monomer-Verhältnis und stufenweisem Emulgatorzusatz verwenden. Zur Einstellung des hohen Quellindex wird dabei bevorzugt bei Temperaturen $< 50$ °C, insbesondere $< 30$ °C gearbeitet, und die Polymerisation vorzugsweise mit organischen Aktivatorsystemen initiiert.

Es ist auch möglich, nach bekannten Methoden zunächst ein feinteiliges Butadienpolymerisat herzustellen, und es anschließend in bekannter Weise zur Einstellung der erforderlichen Teilchengröße zu agglomerieren. Einschlägige Techniken sind beschrieben (vergl. EP-PS 0 029 613 ; EP-PS 0 007 810 ; DD-PS 144 415 ; DE-AS 1 233 131 ; DE-AS 1 258 076 ; DE-OS 2 101 650 ; US-PS 1 379 391).

Ebenfalls kann nach der sogenannten Saatpolymerisationstechnik gearbeitet werden, bei der zunächst ein feinteiliges Butadienpolymerisat hergestellt und dann durch Weiterumsatz mit Butadien enthaltenden Monomeren zu größeren Teilchen weiterpolymerisiert wird.

Prinzipiell kann man Butadienpolymerisatlatices (A) auch herstellen durch Emulgieren von fertigen Butadienpolymerisaten in wäßrigen Medien (vergl. japanische Patentanmeldung 55 125 102).

Der Butadienpolymerisatlatex (B) ist ein Homopolymerisat des Butadiens oder ein Copolymerisat des Butadiens mit $\leqslant 30$ Gew.-% eines weiteren Vinylmonomeren, z. B. Acrylnitril, Methacrylnitril, Styrol, α-Methylstyrol, Halogenstyrol, $C_1$-$C_4$-Alkylstyrol, $C_1$-$C_8$-Alkylacrylat und -methacrylate, Alkylenglycoldiacrylate und -methacrylate, Divinylbenzol, Isopren, Chloropren. Bevorzugt ist Polybutadien.

Der Latex (B) hat einen mittleren Teilchendurchmesser $d_{50} \leqslant 0{,}30$ μm (gemessen wie bei Latex (A)).

3

Bevorzugt ist ein Teilchendurchmesser $d_{50} = 0,08$ bis $0,25 \, \mu m$ ; die Teilchengrößenverteilung ist variierbar, aber $d_{100} = 3,5 \, \mu m$ darf nicht überschritten werden. Der bevorzugte Gelgehalt liegt bei 75-90 %. Der Quellindex von Butadienpolymerisat (B) ist 5 bis 50, bevorzugt 35-45.

Für die Herstellung des Latex (B) eignen sich grundsätzlich alle auch für (A) beschriebenen Verfahren ; die Emulsionspolymerisation ist am günstigsten. In der Regel arbeitet man bei hoher Emulgatorkonzentration und großem Wasser/Monomer-Verhältnis. Heiß- oder Kaltpolymerisation ist möglich, Agglomerations- oder Saatpolymerisation zur Erhöhung der Teilchengröße kann angeschlossen werden.

Bevorzugt arbeitet man mit Aktivatorsystemen, die im Temperaturbereich von 30-75 °C wirksam sind.

Die Pfropfpolymerisate

Können hergestellt werden durch Polymerisation der Pfropfmonomeren in Gegenwart der jeweiligen Pfropfgrundlage bei den angegebenen Verhältnissen von Monomer : Grundlage. Bevorzugt wird Emulsionspolymerisation, jedoch ist auch Übergang in die Suspensionspolymerisation (vergl. US-PS 3 436 440) möglich. Bei der Emulsionspolymerisation können übliche Emulgatoren wie Alkylsulfate, Alkylsulfonate, Aralkylsulfonate, Seifen gesättigter oder ungesättigter Fettsäuren, sowie alkalischer disproportionierter oder hydrierter Abietin- oder Tallölsäuren verwendet werden. Als Aktivatoren kommen anorganische und organische Peroxide, z. B. $H_2O_2$, Di-tert.-Butylperoxid, Cumolhydroperoxid, Dicyclohexylpercarbonat, p-Menthanhydroperoxide, anorganische Persalze wie K-Persulfat, K-Perphosphat, Na-Perborat sowie Redox-Systeme in Betracht, die sich aus einem — in der Regel organischen — Oxidationsmittel und einem Reduktionsmittel zusammensetzen, wobei im Reaktionsmedium zusätzlich Schwermetallionen vorhanden sind (siehe H. Logemann in : Houben-Weyl, Methoden der organischen Chemie, Bd. 14/1, S. 263-297).

Pfropfpolymerisationen laufen nicht vollständig ab, aber gemäß DE-AS 2 420 358 beeinflußt das Ausmaß der Pfropfung, dortselbst und im folgenden definiert als Pfropfgrad G, die Produkteigenschaften. Der Pfropfgrad kann verändert werden durch die Teilchengröße der Grundlagen, durch Zusätze von z. B. Mercaptanen und α-Olefinen, die Art und Menge der Emulgatoren, sowie die Art und Menge des Aktivators.

Im allgemeinen sind für erfindungsgemäße ABS-Einstellungen Pfropfgrade G von 0,3-1,0, vorzugsweise 0,40-0,80 günstig. Das Verhältnis der eingesetzten Monomeren zu der Menge Butadienpolymerisat ist 35 : 65 bis 70 : 30. Außerhalb dieser Grenzen wird die Zähigkeit der Produkte kleiner (siehe Vergleichsversuche a bis i).

Erfindungsgemäß muß der Abstand zwischen zwei Pfropfstellen (« mittlerer Pfropfstellenabstand ») in den Molekülen der Pfropfgrundlage 4 000-10 000 « $C_4$-Einheiten » sein. « $C_4$-Einheit » ist eine Kette von 4 Kohlenstoffatomen, die in dem von Butadien abgeleiteten Strukturelement enthalten ist. Im Falle von Butadiencopolymerisaten muß man die Anzahl der von den Comonomeren gelieferten C-Atome durch 4 teilen und sieht das Ergebnis dann als « $C_4$-Einheiten » des Comonomeren an.

Der mittlere Pfropfstellenabstand (PSA) errechnet sich nach

$$PSA = \frac{M_w}{54 \cdot G}$$

wobei

$M_w$ das mittlere Molgewicht der Pfropfastketten,
54 das Molgewicht einer $C_4$(-Butadien)-Einheit,
G der Pfropfgrad,

$$G = \frac{\text{Menge des chemisch gebundenen Harzes}}{\text{Menge der Kautschukgrundlage}}$$

ist.

Der Pfropfgrad G wird bestimmt aus der eingesetzten oder analysierten Menge Kautschukgrundlage und aus dem acetonunlöslichen Anteil des Pfropfpolymerisats.

Das Molgewicht $M_w$ der Pfropfastketten ist gemäß den Untersuchungen von DINGES et al. (Die Makromol. Chemie *101*, 1967, S. 200-213) identisch mit dem Molgewicht des bei der Pfropfreaktion « nebenher » entstehenden, nicht chemisch gebundenen Harzmaterials, so daß die Molgewichtsbestimmung einfacher an diesem löslichen Material vorgenommen werden kann. Die Bestimmung selbst erfolgt zweckmäßigerweise durch Viskosimetrie einer Lösung des abgetrennten löslichen Harzes in Dimethylformamid entsprechend den Arbeiten von H. Baumann und H. Lange (Angew. Makromol. Chemie *9*, 1969, S. 16 ff und *14*, 1970, S. 25 ff.)

Außer durch die bereits erwähnten Maßnahmen lassen sich G, $M_w$ und PSA in bekannter Weise variieren (vergl. B. Chauvel : Copolymers, Polyblends and Compositions, Ed. N. Platzer, Adv. in Chem. Series *142*, ACS Washington, 1975). Insbesondere sind zu nennen : die Wahl des Verhältnisses Monomergemisch : Pfropfgrundlage, die Art und Menge des Starters, die Reaktionstemperatur, die Emulgatormenge und der Zusatz von Reglern.

PSA-Werte außerhalb des erfindungsgemäßen Intervalls führen nicht zu guten Produktqualitäten. Bei PSA-Werten < 4 000 ist die Zähigkeit der Produkte nicht hoch genug, während zu große Pfropfstellenabstände mit PSA > 10 000 Anlaß zu Nachagglomeration von Kautschukteilchen bei der Verarbeitung und Glanzverlusten darstellen.

Für die Durchführung der Pfropfreaktion eignen sich alle bekannten einschlägigen Techniken. So kann z. B. ein Gemisch der Monomeren Polymerisiert werden ; es ist aber ebenfalls möglich, die Monomeren sowie gegebenenfalls Hilfsstoffe wie Aktivatoren, Emulgatoren zeitabhängig der Reaktionsmischung zuzugeben. Die Temperaturen liegen in der Regel zwischen 25 und 160 °C, vorzugsweise zwischen 40 und 90 °C.

Zur Pfropfreaktion werden erfindungsgemäß Styrol und Acrylnitril im Gewichtsverhältnis 90 : 10 bis 50 : 50, vorzugsweise 65 : 35 bis 75 : 25 eingesetzt, wobei Styrol ganz oder teilweise ersetzt werden kann durch α-Methylstyrol oder Methylmethacrylat. Vorzugsweise arbeitet man mit Styrol/Acrylnitril-Gemischen.

Erfindungsgemäße Pfropfpolymerisate haben Quellindices (gemessen nach der Vorschrift der DE-OS 1 804 763) von 5-19, vorzugsweise 7-15.

Die Matrixharze (« SAN-Harz »)

Sie bestehen aus Copolymerisaten des Styrols und Acrylnitrils im Gewichtsverhältnis 90 : 10 bis 50 : 50, wobei das Styrol ganz oder teilweise durch α-Methylstyrol oder Methylmethacrylat ersetzt werden kann, und wobei gegebenenfalls anteilmäßig bis zu 25 Gew.-%, bezogen auf Matrixharz, ein weiteres Monomer aus der Reihe Maleinsäureanhydrid, Malein-(Fumar)säurebisalkylester, Maleinsäureimid, N-(Cyclo)-alkylmaleinimid, N-(Alkyl)phenylmaleinimid, Inden mitverwendet werden kann.

Einzelheiten zur Herstellung dieser Harze sind beispielsweise in der DE-AS 2 420 358 und der DE-AS 2 724 360 beschrieben. Durch Massepolymerisation hergestellte Matrixharze haben sich besonders bewährt.

Die Formmasse

Das Pfropfpolymerisat kann mit dem SAN-Harz auf verschiedene Weise gemischt werden. Bei Herstellung der Komponenten durch Emulsionspolymerisation können die Latices gemischt und gemeinsam ausgefällt oder auch getrennt ausgefällt und die resultierende Festsubstanz gemischt werden. Wird z. B. das Matrixharz durch Lösungs- oder Massepolymerisation hergestellt, so muß das Pfropfpolymerisat getrennt ausgefällt werden. Hierzu verwendet man bekannte Verfahren, beispielsweise Zusatz von Salzen und/oder Säuren, wonach die Fällprodukte gewaschen, getrocknet und gegebenenfalls aus der Pulverform in eine Granulatform überführt werden. Als Mischvorrichtungen für Fällprodukte bzw. Granulate kommen beispielsweise Mehrwalzenstühle, Mischextruder oder Innenkneter in Betracht.

Der Anteil des Pfropfproduktes an der Gesamtmasse beträgt erfindungsgemäß 10-65 Gew.-%, wobei der Anteil der Pfropfpolymerisate geringer ist, da nicht alle Monomeren Pfropfäste bilden. Bevorzugte Formmassen haben folgende Zusammensetzung :

Pfropfprodukt : 30-60 Teile
Matrixharz :    70-40 Teile,

wobei mit Anteilen von 40-60 Teilen Pfropfprodukt die höchsten Zähigkeiten erreicht werden

Den Formmassen der Erfindung können bei der Herstellung, Aufarbeitung, Weiterverarbeitung und Entformung die erforderlichen bzw. zweckmäßigen Additive zugesetzt werden, z. B. Antioxidantien, UV-Stabilisatoren, Peroxidzerstörer, Antistatika, Gleitmittel, Flammschutzmittel, Füll- oder Verstärkerstoffe (Glasfasern, Kohlefasern, etc.) und Farbmittel.

Die Endverformung kann auf handelsüblichen Verarbeitungsaggregaten vorgenommen werden und umfaßt z. B. Spritzgußverarbeitung, Plattenextrusion mit gegebenenfalls anschließender Warmverformung, Kaltverformung, Extrusion von Rohren und Profilen, Kalander-Verarbeitung.

Beispiele und Vergleichsversuche

Die folgenden Beispiele erläutern die Erfindung, ohne sie einzuschränken. Die angegebenen Teile sind Gewichtsteile und beziehen sich immer auf Festbestandteile bzw. polymerisierbare Bestandteile.

Die Pfropfgrundlagen

Tabelle 1 gibt eine Übersicht über die eingesetzten Butadienpolymerisatlatices und ihre Charakteristika.

Tabelle 1

| Latex-Nr. | chem. Aufbau | $d_{50}$ $\mu m$ | Gelgehalt % | Quellindex | Latex-Typ |
|-----------|--------------|------------------|-------------|------------|-----------|
| I | Polybutadien | 0,106 | 97 | 9 | B |
| II | " | 0,296 | 94 | 11 | B |
| III | " | 0,184 | 75 | 42 | B |
| IV | " | 0,296 | 67 | 41 | B |
| V | " | 0,238 | 86 | 15 | B |
| VI | 25 % Styrol + 75 % Butadien | 0,431 | 76 | 37 | A |
| VII | Polybutadien | 0,407 | 66 | 40 | A |
| VIII | Polybutadien | 0,603 | 94 | 12 | ) nicht er- |
| IX | Polybutadien | 0,320 | 94 | 10 | ) findungs- gemäß. |

Pfropfrezepturen

Rezeptur P. Persulfataktivierung

Die Menge x des Latexgemisches wird unter Rühren mit Wasser auf einen Festgehalt von ca. 20 % gebracht und auf $\alpha$ °C erwärmt. Dann gibt man $\beta$ Teile $K_2S_2O_8$ gelöst in Wasser zu. Anschließend werden y Teile eines Gemisches aus Styrol und Acrylnitril (72 : 28) sowie 2 Teile eines Harzsäureemulgators, gelöst in alkalisch eingestelltem Wasser, in 4 Std. zudosiert. Nach einer Nachreaktionszeit bei 65 °C wird der Pfropflatex nach Zugabe von ca. 1,0 Teilen Antioxidantien in einer essigsauer eingestellten $MgSO_4$-Flotte koaguliert, das resultierende Pulver gewaschen und bei 70 °C im Vakuum getrocknet.

| Rezeptur P | $\alpha$ | $\beta$ |
|------------|----------|---------|
| P 1 | 58 °C | 0,2 |
| P 2 | 65 °C | 0,5 |
| P 3 | 65 °C | 0,4 |
| P 4 | 65 °C | 0,2 |

Rezeptur R : Redoxaktivierung

Die Menge x des Latexgemisches wird unter Rühren mit Wasser auf einen Festgehalt von ca. 20 % gebracht, 0,75 Tle Dextrose, $\alpha$ Tle $\beta$-Nitrostyrol, sowie geringe Mengen komplexierter $Fe^{++}$-Ionen zugefügt, auf $\beta$ °C erwärmt und anschließend gleichzeitig y Tle eines Gemisches aus Styrol und Acrylnitril (72 : 28) sowie eine verdünnte alkalische wäßrige Emulsion aus 0,2 Tln Diisopropylbenzolhydroperoxid und 2,0 Tln Harzsäure-Emulgator während 4-5 Std. zudosiert. Das Reaktionsprodukt wird noch einige Zeit bei 65 °C gehalten und dann wie vorher gefällt und aufgearbeitet.

| Rezeptur R | $\alpha$ | $\beta$ |
|------------|----------|---------|
| R 1 | -- | 50 °C |
| R 2 | 0,2 | 45 °C |
| R 3 | 0,2 | 50 °C |

Herstellung und Ausprüfung der Formmassen

50 Teile der Pfropfpolymerisate werden mit 50 Tln eines Styrol/Acrylnitril (72 : 28)-Copolymerisats ($M_W$ ca. 115 000, $M_W/M_N$ — 1 = 2,0), 2 Tln Ethylendiaminbisstearoylamid und 0,2 Tln eines Silikonöls in einem Innenkneter vermischt und anschließend zu Normkleinstäben, einer Platte (zur Glanzbeurteilung) und einer Spirale (zur Beurteilung der Fließweglänge) verspritzt.

Die Kerbschlagzähigkeit wurde bei Raumtemperatur ($a_K^{RT}$) und bei — 40 °C ($a_K^{-40 \, °C}$) nach DIN 53 543 (Einheit : kJ/m²), die Kugeldurckhärte Hc wurde nach DIN 53 546 (Einheit : N/mm²), die Wärmeformbeständigkeit nach Vicat B (Einheit : °C), der Glanz nach der Skala A-H gemäß DE-AS 2 420 358, die Fließweglänge bei 220 °C an einer Spirale von ca. 8 mm Breite und ca. 2 mm Stärke (Einheit : cm) gemessen.

Vergleichsversuche a-i

In den Vergleichsversuchen a-i wird das Verhältnis der eingesetzten Monomeren zur eingesetzten Menge Latexgemisch in der Pfropfstufe variiert. Durch Zusatz von SAN-Matrixharz wird die Formmasse auf konstante Kautschukanteile gebracht (Ausnahme : Versuch a und b).

Als Pfropfgrundlagen wurden III und VI im Verhältnis 80 : 20 eingesetzt und die Pfropfrezeptur P1 benutzt.

Aus den Prüfdaten (Tabelle 2) folgt, daß man bei Verhältnissen von x, y, die außerhalb der Erfindung liegen, deutliche Nachteile in der Produktqualität erhält :

ist x/y < 35/65, so nimmt die Zähigkeit stark ab ;
ist x/y > 70/30, so gehen Kältezähigkeit und RT-Zähigkeit zurück.

(Siehe Tabelle 2 Seite 8 f.)

## Tabelle 2

Vergleichsversuche a-i ; Variation des Verhältnisses x : y = Pfropfgrundlage : Monomerumsatz

| Vergleichs-versuch | Pfropfung x : y | Formmasse | | Prüfdaten | | | | | |
|---|---|---|---|---|---|---|---|---|---|
| | | Menge Pfropf-polymer | Menge SAN-Matrix-harz | $a_K^{RT}$ | $a_K^{-40}$ | $II_c$ | Vicat B | Fließ-länge $220^{\circ}C$ | Glanz-stufe |
| a | 15 : 85 | 100 | — | 12 | 4 | 96 | 99 | 37 | C |
| b | 25 : 75 | 100 | — | 19 | 6 | 65 | 93 | 29 | C |
| c | 30 : 70 | 83,3 | 16,7 | 30 | 17 | 69 | 94 | 29 | D |
| d | 40 : 60 | 62,5 | 37,5 | 31 | 17 | 68 | 92 | 32 | D |
| e | 50 : 50 | 50,0 | 50,0 | 29 | 18 | 71 | 91 | 34 | D |
| f | 60 : 40 | 41,7 | 58,3 | 28 | 18 | 70 | 91 | 37 | C |
| g | 70 : 30 | 35,7 | 64,3 | 24 | 14 | 67 | 89 | 40 | D-E |
| h | 80 : 20 | 31,3 | 68,8 | 17 | 7 | 64 | 89 | 42 | C |
| i | 90 : 10 | 27,8 | 72,2 | 6 | 3 | 63 | 87 | 44 | D |

0 116 330

Vergleichsversuche k-s

In den Vergleichsversuchen k-s wird gezeigt, daß mit nicht erfindungsgemäßen Latices bzw. Latexkombinationen trotz erfindungsgemäßen Verhältnissen x : y und teilweise erfindungsgemäßem PSA keine hohen Zähigkeiten erreichbar sind (Tabelle 3).

Vergleichsversuche t-y

In den Vergleichsversuchen t-y wird gezeigt, daß mit erfindungsgemäßen Latices auch bei erfindungsgemäßem Verhältnis x : y bei nicht erfindungsgemäßem PSA keine hohen Zähigkeiten erreichbar sind (Tabelle 4).

Beispiele 1-10

Tabelle 5 zeigt Ergebnisse mit erfindungsgemäßen Kombinationen.

(Siehe Tabelle 3 Seite 10 ff.)

## Tabelle 3

### Vergleichsversuche k-s ; Verwendung nicht erfindungsgemäßer Latices

| Vergleichs-versuch | Pfropfgrundlage Nr. | Mengenverhältnis | Pfropf-rezeptur | x : y | Pfropf-stellen-abstand | $a_K^{RT}$ | $a_K^{-40^\circ}$ | $H_c$ | Vicat B | Fließ-weg-länge | Glanz-stufe |
|---|---|---|---|---|---|---|---|---|---|---|---|
| k | II | 100 : 0 | P 2 | 50:50 | 2119 | 20 | 14 | 76 | 91 | 38 | E |
| l | I | 100 : 0 | P 3 | 50:50 | 1540 | 10 | 6 | 81 | 97 | 38 | F |
| m | V | 100 : 0 | P 3 | 50:50 | 1745 | 19 | 14 | 76 | 94 | 36 | E |
| n | IV | 100 : 0 | P 3 | 50:50 | 2421 | 18 | 14 | 77 | 96 | 36 | E |
| o | VIII | 100 : 0 | P 2 | 50:50 ) | | | | | | | |
| p | VIII | 100 : 0 | R 1 | 50:50 ) Latices bilden bei Pfropfung große Koagulatmengen | | | | | | | |
| q | VIII:IV | 50 : 50 | R 1 | 50:50 | 9809 | 22 | 9 | 75 | 95 | 34 | B - C |
| r | IV | 100 : 0 | P 2 | 30:70 | 2726 | 19 | 5 | 78 | 94 | 31 | B - A |
| s | IX:VII | 80 : 20 | R 1 | 50:50 | 4231 | 17 | 8 | 74 | 94 | 33 | E |

0 116 330

Tabelle 4

Vergleichsversuch t-y ; Verwendung erfindungsgemäßer Latices bei nicht erfindungsgemäßem Pfropf-stellenabstand

| Vergleichs-versuch | Pfropfgrundlagen | | Pfropfrezeptur | | Pfropf-stellen-abstand | $a_K^{RT}$ | $a_K^{-40°}$ | $H_c$ | Vicat B | Fließ-länge | Glanz-stufe |
|---|---|---|---|---|---|---|---|---|---|---|---|
| | Nr. | Mengen-verhältnis | Nr. | x : y | | | | | | | |
| t | II+VI | 50 : 50 | R 1 | 50:50 | 1750 | 14 | 7,5 | 52 | 89 | 29 | D |
| u | II+VI | 50 : 50 | P 2 | 40:60 | 1526 | 20 | 9 | 72 | 90 | 35 | |
| v | V +VI | 80 : 20 | P 3 | 50:50 | 2318 | 19 | 14 | 74 | 91 | 34 | F |
| w | V +VII | 80 : 20 | P 3 | 50:50 | 3317 | 21 | 15 | 76 | 94 | 34 | D – E |
| x | III+VI | 80 : 20 | P 3 | 50:50 | 2421 | 20 | 15 | 76 | 97 | 35 | F |
| y | II+VII | 80 : 20 | P 3 | 50:50 | 2617 | 21 | 15 | 77 | 90 | 35 | E |

0 116 330

## Tabelle 5

### erfindungsgemäße Beispiele

| Beispiel | Pfropfgrundlagen Nr. | Mengenverhältnis | Pfropfrezeptur Nr. | x : y | Pfropf-stellen-abstand | $a_K^{RT}$ | $a_K^{-40^o}$ | $H_C$ | Vicat B | Fließ-länge | Glanz-stufe |
|---|---|---|---|---|---|---|---|---|---|---|---|
| 1 | II+VI | 50 : 50 | R 2 | 50:50 | 9196 | 28 | 18 | 66 | 86 | 35 | D |
| 2 | III+VI | 80 : 20 | P 1 | 50:50 | 8916 | 33 | 18 | 69 | 94 | 33 | D-E |
| 3 | IV+VII | 80 : 20 | P 1 | 50:50 | 6107 | 32 | 18 | 67 | 92 | 32 | D |
| 4 | IV+VII | 65 : 35 | P 1 | 50:50 | 8891 | 35 | 18 | 66 | 92 | 32 | D |
| 5 | IV+VII | 50 : 50 | P 1 | 50:50 | 8325 | 34 | 14 | 66 | 92 | 32 | D |
| 6 | IV+VII | 80 : 20 | P 3 | 50:50 | 4120 | 32 | 17 | 68 | 93 | 33 | D |
| 7 | II+VI | 50 : 50 | R 3 | 50:50 | 8544 | 27 | 19 | 63 | 89 | 34 | D-E |
| 8 | III+VI | 50 : 50 | R 3 | 50:50 | 7643 | 28 | 20 | 60 | 89 | 34 | D |
| 9 | II+VI | 30 : 70 | P 4 | 50:50 | 4442 | 30 | 18 | 68 | 88 | 33 | C |
| 10 | II+VI | 50 : 50 | R 3 | 50:50 | 8787 | 29 | 19 | 69 | 89 | 33 | D |

0 116 330

# 0 116 330

**Patentanspruch**

Formmassen auf Basis von ABS-Polymerisaten, bestehend aus

10 bis 65 Gew.-% eines Pfropfpolymerisats, erhältlich durch Emulsionspolymerisation von Styrol und Acrylnitril im Gewichtsverhältnis 90 : 10 bis 50 : 50, wobei Styrol ganz oder teilweise ersetzt werden kann durch α-Methylstyrol oder Methylmethacrylat, in Gegenwart von mindestens 2 Butadienpolymerisatlatices vom Typ (A) und Typ (B), welche jeweils 0 bis 30 % eines weiteren Vinylmonomeren copolymerisiert enthalten, und wobei das Massenverhältnis von eingesetzten Monomeren zu eingesetztem Butadienpolymerisat 35 : 65 bis 70 : 30 beträgt,

90 bis 35 Gew.-% mindestens eines Copolymerisats aus Styrol und Acrylnitril im Gewichtsverhältnis 90 : 10 bis 50 : 50, wobei das Styrol ganz oder teilweise durch α-Methylstyrol oder Methacrylsäuremethylester ersetzt werden kann,

dadurch gekennzeichnet, daß der Butadienpolymerisationslatex (A) einen Teilchendurchmesser $d_{50} \geqslant 0{,}35$ μm und einen Gelgehalt $\leqslant 85$ % besitzt und der verwendete Butadienpolymerisatlatex (B) einen Teilchendurchmesser $d_{50} \leqslant 0{,}30$ μm besitzt und der mittlere Pfropfstellenabstand des daraus hergestellten Pfropfpolymerisats 4 000-10 000 $C_4$-Einheiten beträgt, wobei das Gewichtsverhältnis (bezogen auf Feststoff) von (A) zu (B) 90 : 10 bis 5 : 95 ist.

**Claim**

Moulding compositions based on ABS polymers, consisting of

10 to 65 % by weight of a graft polymer, obtainable by the emulsion polymerisation of styrene and acrylonitrile in a weight ratio of 90 : 10 to 50 : 50, it being possible for styrene to be completely or partly replaced by α-methyl styrene or methyl methacrylate, in the presence of at least 2 butadiene polymer latices of type (A) and type (B), each of which contains 0 to 30 % of a further vinyl monomer in a copolymerised form, the weight ratio of the monomers used to the butadiene polymer used being 35 : 65 to 70 : 30,

90 to 35 % by weight of at least one copolymer of styrene and acrylonitrile in a weight ratio of 90 : 10 to 50 : 50, it being possible for the styrene to be completely or partly replaced by α-methyl styrene or methyl methacrylate,

characterised in that the butadiene polymerisation latex (A) has a particle diameter $d_{50}$ of $\geqslant 0.35$ μm and a gel content of $\leqslant 85$ % and the butadiene polymer latex (B) used has a particle diameter $d_{50}$ of $\leqslant 0.30$ μm and the average grafting site interval of the graft polymer produced therefrom is 4 000 to 10 000 $C_4$ units, the weight ratio (based on solids) of (A) to (B) being 90 : 10 to 5 : 95.

**Revendication**

Matières à mouler à base de polymères ABS, consistant en

10 à 65 % en poids d'un polymère greffé obtenu par polymérisation en émulsion du styrène et de l'acrylonitrile dans des proportions relatives en poids de 90 : 10 à 50 : 50, le styrène pouvant être remplacé en totalité ou en partie par de l'α-méthylstyrène ou du méthacrylate de méthyle en présence d'au moins deux latex de polymères de butadiène de type A et de type B, contenant chacun à l'état copolymérisé 0 à 30 % d'un autre monomère vinylique, les proportions relatives en poids entre les monomères mis en œuvre et le polymère du butadiène mis en œuvre étant de 35 : 65 à 70 : 30,

90 à 35 % en poids d'au moins un copolymère du styrène et de l'acrylonitrile dans des proportions relatives en poids de 90 : 10 à 50 : 50, le styrène pouvant être remplacé en totalité ou en partie par l'α-méthylstyrène ou le méthacrylate de méthyle,

caractérisées en ce que le latex de polymérisation du butadiène A a un diamètre de particule $d_{50}$ supérieur ou égal à 0,35 μm et une teneur en gel inférieure ou égale à 85 %, et le latex de polymère du butadiène utilisé B a un diamètre de particule $d_{50}$ inférieur ou égal à 0,30 μm, et la distance moyenne entre les sites de greffage du polymère greffé préparé à partir de ces produits est de 4 000 à 10 000 motifs en $C_4$, les proportions relatives en poids (rapportées aux matières solides) A/B étant de 90 : 10 à 5 : 95.

13